# FASCICULE DE BREVET EUROPEEN

(11) **EP 1 772 921 B1**
(45) Date de publication et mention de la délivrance du brevet: **01.09.2010**
(21) Numéro de dépôt: 06121498.7
(22) Date de dépôt: 29.09.2006
(51) Int. Cl.: H01M 8/10, H01M 4/86, H01M 8/02, H01M 8/04

(54) **Pile à combustible**
Brennstoffzelle
Fuel cell

(30) Priorité: 29.09.2005 FR 0552944
(43) Date de publication de la demande: 11.04.2007
(73) Titulaire: ST MICROELECTRONICS S.A., 92120 Montrouge (FR)
(72) Inventeur: KOUASSI, Sébastien, 37300, JOUE LES TOURS (FR); ROY, Mathieu, 37300, JOUE LES TOURS (FR)
(74) Mandataire: de Beaumont, Michel

(56) Documents cités:
- WO-A-2004/091026
- US-A- 5 759 712
- US-A1- 2003 096 146
- US-A1- 2004 197 638
- US-B1- 6 444 602

## Description

### Domaine de l'invention

La présente invention concerne une pile à combustible.

### Exposé de l'art antérieur

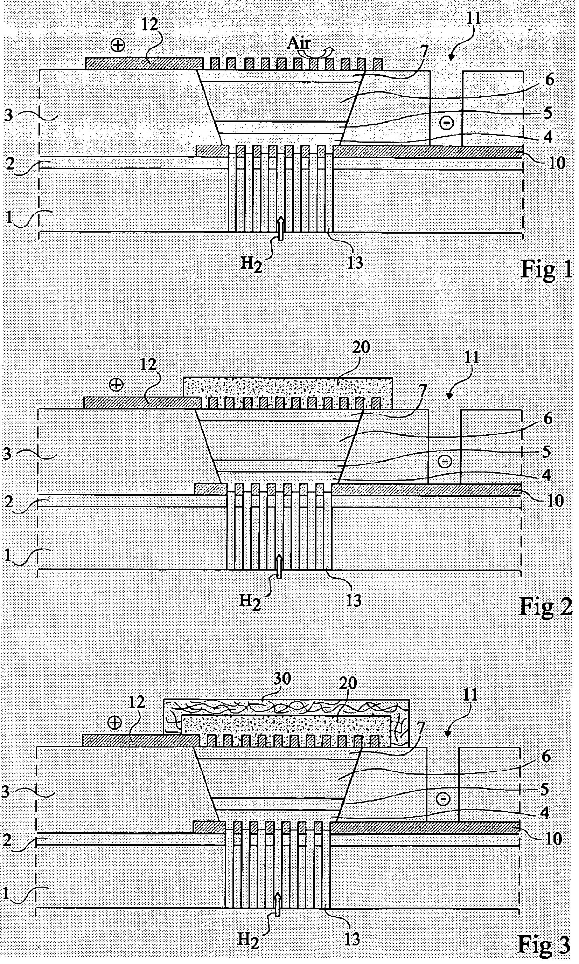

La figure 1 représente un exemple de réalisation d'une cellule de pile à combustible utilisant des techniques de microélectronique. Cette cellule est formée sur une tranche de silicium 1 revêtue d'une première couche isolante 2 fine et d'une seconde couche isolante 3 plus épaisse. Une ouverture est formée dans une partie de la couche isolante 3. Dans cette ouverture sont successivement déposés un support 4, une couche de catalyseur 5, un électrolyte 6 et une seconde couche de catalyseur 7. Une électrode 10, placée sur la première couche isolante 2, permet de prendre un contact sur la face inférieure de la cellule de pile, sur le support 4. Une ouverture 11 de la seconde couche isolante 3 permet d'accéder à l'électrode 10. Une électrode supérieure 12 permet de prendre un contact sur la couche de catalyseur supérieure 7. Les électrodes 10 et 12 sont munies d'ouvertures, et des canaux 13 sont formés dans la plaquette de silicium 1 en regard des ouvertures dans la métallisation de face inférieure. L'électrode inférieure 10 et l'électrode supérieure 12 constituent respectivement un collecteur d'anode et un collecteur de cathode.

L'électrolyte 6 est par exemple un acide polymère tel que du Nafion sous forme solide et les couches de catalyseur sont par exemple des couches à base de carbone et de platine. Ceci ne constitue qu'un exemple de réalisation. Divers types de piles à combustible réalisables sous la forme illustrée en figure 1 sont connus dans la technique.

Pour faire fonctionner la pile à combustible, on injecte de l'hydrogène selon la flèche H₂ du côté de la face inférieure et de l'air (porteur d'oxygène) est injecté du côté de la face supérieure. L'hydrogène est "décomposé" au niveau de la couche de catalyseur 5 pour former d'une part des protons H+ qui se dirigent vers l'électrolyte 6 et d'autre part des électrons qui se dirigent, par l'extérieur de la pile, vers le collecteur d'anode 10. Les protons H+ traversent l'électrolyte 6 jusqu'à rejoindre la couche de catalyseur 7 où ils se recombinent avec l'oxygène et des électrons arrivant de l'extérieur de la pile par le collecteur de cathode. De façon connue, avec une telle structure, on obtient un potentiel positif sur le collecteur de cathode 12 (côté oxygène) et un potentiel négatif sur le collecteur d'anode 10 (côté hydrogène).

Une pile à combustible du type ci-dessus est par exemple décrite dans la demande de brevet américain n°2003/0096146.

Un inconvénient de ce type de pile à combustible est que l'électrolyte 6 tend à se dessécher au fur et à mesure de son utilisation et les performances de la pile diminuent.

### Résumé de l'invention

Un objet de la présente invention est de prévoir une pile à combustible comprenant un électrolyte qui ne s'assèche pas.

Un autre objet de la présente invention est de prévoir une telle pile à combustible de structure simple.

Pour atteindre ces objets, la présente invention prévoit une cellule de pile à combustible recouverte d'une couche de polymères hydrophiles.

Selon un mode de réalisation de la cellule de pile à combustible susmentionnée, la couche de polymères, hydrophiles est placée à proximité d'une région de la pile où est générée de l'eau.

Selon un mode de réalisation de la cellule de pile à combustible décrite ci-dessus, la couche de polymères hydrophiles est poreuse ou présente des ouvertures afin de permettre le passage d'un gaz tel que l'oxygène.

Selon un mode de réalisation de la cellule de pile à combustible décrite ci-dessus, une couche d'un matériau hydrophobe recouvre la couche de polymères hydrophiles.

Selon un mode de réalisation de la cellule de pile à combustible décrite ci-dessus, la couche d'un matériau hydrophobe est poreuse pour ce gaz ou présente au moins une ouverture afin de permettre le passage d'un gaz tel que l'oxygène.

Selon un mode de réalisation de la cellule de pile à combustible décrite ci-dessus, la couche de polymères hydrophiles est thermiquement conductrice.

Selon un mode de réalisation de la cellule de pile à combustible susmentionnée, la couche de polymères hydrophiles contient des nanotubes de carbone.

Selon un mode de réalisation de la cellule de pile à combustible décrite ci-dessus, la couche d'un matériau hydrophobe est thermiquement conductrice.

Selon un mode de réalisation de la cellule de pile à combustible susmentionnée, la couche d'un matériau hydrophobe est constituée de nanotubes de carbone.

Selon un mode de réalisation de la cellule de pile à combustible décrite ci-dessus, la cellule comprend un électrolyte placé entre des première et seconde couches de catalyseur reliées respectivement à un collecteur d'anode et à un collecteur de cathode, de l'hydrogène étant amené en face arrière de la pile au niveau de la première couche de catalyseur, et de l'oxygène étant amené en face avant de la pile au niveau de la seconde couche de catalyseur, ladite couche de polymères hydrophiles étant placée en face avant au-dessus de la seconde couche de catalyseur et étant traversée par de l'oxygène.

### Brève description des dessins

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1 est une vue en coupe d'une cellule de pile à combustible connue ;
la figure 2 est une vue en coupe d'une cellule de pile à combustible selon la présente invention ; et
la figure 3 est une vue en coupe d'une cellule de pile à combustible selon une variante de réalisation de la cellule représentée en figure 2.

### Description détaillée

Par souci de clarté, de mêmes éléments ont été désignés par de mêmes références aux différentes figures et, de plus, comme cela est habituel dans la représentation des circuits intégrés, les diverses figures ne sont pas tracées à l'échelle.

Afin d'éviter le dessèchement d'une cellule de pile à combustible, la présente invention prévoit de retenir l'eau naturellement générée par la cellule. En effet, lorsque les protons H+ se recombinent avec l'oxygène et des électrons arrivant par le collecteur de cathode, il se forme de l'eau au niveau de la couche de catalyseur supérieure 7. Afin d'éviter que cette eau ne s'évapore, la présente invention prévoit de placer une couche de polymères hydrophiles à proximité de la couche de catalyseur supérieure 7. Cette couche de polymères hydrophyle permet de maintenir une ambiance humide dans la pile, et notamment au niveau de l'électrolyte 6.

La figure 2 est une vue en coupe d'une cellule de pile à combustible qui comprend l'ensemble des éléments de la cellule représentée en figure 1. Selon un aspect de la présente invention, une couche de polymères hydrophiles 20 est placée au-dessus de la couche de catalyseur supérieure 7. La couche de polymères hydrophiles 20 recouvre la partie de l'électrode supérieure 12 située au-dessus de la couche de catalyseur supérieure 7 ainsi que les portions de la couche isolante 3 situées à proximité de la couche de catalyseur 7. Une partie de l'électrode supérieure 12 située au-dessus de la seconde couche isolante 3 est découverte afin de laisser son accès libre. De même, l'ouverture 11 est laissée libre de façon à permettre un accès à l'électrode inférieure 10.

Par ailleurs, afin de permettre le passage de l'air, et notamment de l'oxygène, vers la couche de catalyseur supérieure 7, la couche de polymères hydrophiles 20 est de préférence poreuse. Un exemple de couche de polymères hydrophiles poreuse est par exemple constituée de polyéthylène aggloméré fonctionnalisé par des groupements hydroxyles. Dans le cas où la couche de polymères n'est pas poreuse, des ouvertures traversantes sont formées dans cette dernière pour permettre une circulation d'oxygène.

Par ailleurs, un autre moyen de limiter l'évaporation de l'eau générée par la pile est de "refroidir" la pile, l'évaporation étant d'autant plus importante que la température de la cellule est élevée. Afin de faciliter la dissipation thermique de la chaleur produite par la cellule de pile à combustible, on choisit donc de préférence, une couche de polymères hydrophiles thermiquement conductrice.

Pour ce faire, on peut prendre une couche de polymères hydrophiles contenant des nanotubes de carbone. Les nanotubes de carbone étant de très bons conducteurs thermiques, la présence d'une faible quantité de ces derniers permet d'obtenir une très bonne dissipation thermique.

La figure 3 est une vue en coupe d'une cellule de pile à combustible comprenant les mêmes éléments que ceux de la cellule représentée en figure 2. Cette cellule comprend en outre une couche d'un matériau hydrophobe 30 recouvrant la couche de polymères hydrophiles 20. La couche hydrophobe 30 permet de limiter encore davantage l'évaporation de l'eau produite par la cellule de pile à combustible.

La couche de matériau hydrophobe est de préférence constituée d'un matériau poreux, laissant passer l'oxygène. Dans le cas inverse, une ouverture de la couche de polymère hydrophobe 30 doit être prévue au-dessus de la couche de catalyseur supérieure 7 afin de laisser circuler l'oxygène nécessaire au fonctionnement de la cellule de pile à combustible.

Un exemple de couche hydrophobe poreuse laissant circuler l'oxygène est une couche constituée de nanotubes de carbone. Une telle couche permet en outre de réaliser une très bonne dissipation thermique de la chaleur produite par la cellule de pile à combustible.

Bien entendu, la présente invention est susceptible de diverses variantes et modifications qui apparaîtront à l'homme de l'art. En particulier, les figures précédemment décrites ne représentent qu'une cellule de pile à combustible. En pratique, sur une même plaquette 1, on pourra réaliser un grand nombre de cellules qui pourront être montées en série/parallèle selon l'utilisation souhaitée.

De plus, la présente invention s'applique à divers types de piles à combustible pour lesquelles il est utile de retenir l'eau qu'elles produisent.

## Revendications

1. Cellule de pile à combustible **caractérisée en ce qu'**elle est recouverte d'une couche de polymères hydrophiles (20).

2. Cellule de pile à combustible selon la revendication 1, générant de l'eau lors de son utilisation, la couche de polymères hydrophiles (20) étant placée à proximité de la région de génération d'eau.

3. Cellule de pile à combustible selon la revendication 1, dans laquelle la couche de polymères hydrophiles (20) est poreuse ou présente des ouvertures afin de permettre le passage d'un gaz tel que l'oxygène.

4. Cellule de pile à combustible selon la revendication 1, dans laquelle une couche d'un matériau hydrophobe (30) recouvre la couche de polymères hydrophiles (20).

5. Cellule de pile à combustible selon la revendication 4, dans laquelle la couche d'un matériau hydrophobe (30) est poreuse ou présente au moins une ouverture afin de permettre le passage d'un gaz tel que l'oxygène.

6. Cellule de pile à combustible selon la revendication 1, dans laquelle la couche de polymères hydrophiles (20) est thermiquement conductrice.

7. Cellule de pile à combustible selon la revendication 6, dans laquelle la couche de polymères hydrophiles (20) contient des nanotubes de carbone.

8. Cellule de pile à combustible selon la revendication 4, dans laquelle la couche d'un matériau hydrophobe (30) est thermiquement conductrice.

9. Cellule de pile à combustible selon la revendication 8, dans laquelle la couche d'un matériau hydrophobe (30) est constituée de nanotubes de carbone.

10. Cellule de pile à combustible selon la revendication 1, comprenant un électrolyte (6) placé entre des première et seconde couches de catalyseur (5, 7) reliées respectivement à un collecteur d'anode et à un collecteur de cathode, de l'hydrogène étant amené en face arrière de la pile au niveau de la première couche de catalyseur, et de l'oxygène étant amené en face avant de la pile au niveau de la seconde couche de catalyseur, ladite couche de polymères hydrophiles (20) étant placée en face avant au-dessus de la seconde couche de catalyseur et étant traversée par de l'oxygène.

## Claims

1. A fuel battery cell **characterized in that** it is covered with a hydrophilic polymer layer (20).

2. The fuel battery cell of claim 1, generating water when used, the hydrophilic polymer layer (20) being placed close to a region of the cell where water is generated.

3. The fuel battery cell of claim 1, wherein the hydrophilic polymer layer (20) is porous or has openings to enable passing of a gas such as oxygen.

4. The fuel battery cell of claim 1, wherein a layer (30) of a hydrophobic material covers the hydrophilic polymer layer (20).

5. The fuel battery cell of claim 4, wherein the hydrophobic material layer (30) is porous or exhibits at least one opening to enable passing of a gas such as oxygen.

6. The fuel battery cell of claim 1, wherein the hydrophilic polymer layer (20) is thermally conductive.

7. The fuel battery cell of claim 6, wherein the hydrophilic polymer layer (20) contains carbon nanotubes.

8. The fuel battery cell of claim 4, wherein the layer of a hydrophobic material (30) is thermally conductive.

9. The fuel battery cell of claim 8, wherein the layer of a hydrophobic material (30) is formed of carbon nanotubes.

10. The fuel battery cell of claim 1, comprising an electrolyte (6) placed between first and second catalyst layers placed between first and second catalyst layers (5, 7) respectively connected to an anode collector and to a cathode collector, hydrogen being brought to the rear surface of the cell at the level of the first catalyst layer, and oxygen being brought to the front surface of the cell at the level of the second catalyst layer, said hydrophilic polymer layer (20) being placed at the front surface above the second catalyst layer and passing oxygen.

## Patentansprüche

1. Brennstoffzelle, **dadurch gekennzeichnet, dass** sie durch eine hydrophile Polymerschicht (20) abgedeckt ist.

2. Brennstoffzelle gemäß Anspruch 1, die bei Verwendung Wasser erzeugt, wobei die hydrophile Polymerschicht (20) nahe einem Bereich der Zelle, in dem Wasser erzeugt wird, angeordnet ist.

3. Brennstoffzelle gemäß Anspruch 1, wobei die hydrophile Polymerschicht (20) porös ist oder Öffnungen aufweist, um ein Passieren eines Gases, wie zum Beispiel Sauerstoff, zu ermöglichen.

4. Brennstoffzelle gemäß Anspruch 1, wobei eine Schicht (30) eines hydrophoben Materials die hydrophile Polymerschicht (20) abdeckt.

5. Brennstoffzelle gemäß Anspruch 4, wobei die hydrophobe Materialschicht (30) porös ist oder wenigstens eine Öffnung zeigt, um ein Passieren eines Gases, wie zum Beispiel Sauerstoff, zu ermöglichen.

6. Brennstoffzelle gemäß Anspruch 1, wobei die hydrophile Polymerschicht (20) wärmeleitend ist.

7. Brennstoffzelle gemäß Anspruch 6, wobei die hydrophile Polymerschicht (20) Kohlenstoff-Nanoröhren aufweist.

8. Brennstoffzelle gemäß Anspruch 4, wobei die Schicht des hydrophoben Materials (30) wärmeleitend ist.

9. Brennstoffzelle gemäß Anspruch 8, wobei die Schicht des hydrophoben Materials (30) aus Kohlenstoff-Nanoröhren gebildet ist.

10. Brennstoffzelle gemäß Anspruch 1, die ferner ein Elektrolyt (6) aufweist, das zwischen ersten und zweiten Katalysatorschichten (5, 7) angeordnet ist, die jeweils an einen Anoden-Stromabnehmer und einen Kathoden-Stromabnehmer angeschlossen ist, wobei Wasserstoff an die hintere Oberfläche der Zelle auf der Höhe der ersten Katalysatorschicht gebracht wird und wobei Sauerstoff an die vordere Oberfläche der Zelle auf der Höhe der zweiten Katalysatorschicht gebracht wird, wobei die hydrophile Polymerschicht (20) auf der vorderen Oberfläche oberhalb der zweiten Katalysatorschicht angeordnet ist und den Sauerstoff passieren lässt.
